# EUROPEAN PATENT APPLICATION

(11) **EP 1 312 847 A1**
(43) Date of publication of application: **21.05.2003**
(21) Application number: 01830714.0
(22) Date of filing: 19.11.2001
(51) Int. Cl.: F16L 5/06, F16L 19/065, H02G 3/06, H02G 3/08

(54) **Sleeve of a gland assembly**

(71) Applicant: MAXPLA S.r.l., Cassina Nuova di Bollate (Milano) (IT)
(72) Inventor: Marelli, Carlo, 20021 Cassina Nuova di Bollate (IT)
(74) Representative: Long, Giorgio

(57) **Abstract**

A sleeve (1) which can house at least a portion (2) of a cable or a pipe (4) comprises an internally hollow body (6) having at least one flexible portion (22) which can be clamped around the said portion of the cable or pipe, and a sealing element (26) provided in the region of the flexible portion of the sleeve body and deformable together therewith.

The sleeve (1) can be associated with a clamping ring nut (100) which can deform the assembly formed by the flexible portion (22) of the sleeve body and the sealing element (26) onto the portion of the cable or of the pipe which is housed in the sleeve body (1).

The sleeve (1) is characterized in that the flexible portion (22) of the sleeve body is at least partially embedded in the sealing element (26), forming means for fixing and at the same time sealing between the cable and the sleeve, which means are particularly resistant to wear due to the action of the ring nut (100) and can be reused several times since they are not permanently deformable.

## Description

The present invention relates to a sleeve or coupling for connecting tubular elements such as pipes or cables to one another or to operation and control boxes or panels provided in systems for various uses, such as electrical, hydraulic, pneumatic systems and the like.

In the above-mentioned systems, there is usually a need to lead a cable or pipe into a box, for example, containing controls or switches, in order to connect the cable or the pipe to any controls, valves, apparatus or the like contained in the box.

The cable or pipe may be led into the box simply by inserting the tubular element through a hole suitably formed in the wall of the box.

Usually, however, a sleeve is inserted in the opening in the box wall so to house the tubular element, allowing the element to extend into the box.

The sleeve can be tightened onto the tubular element in various ways in order to prevent an external force on the element, for example, a pulling force or an accidental tug, loosening the tubular element or pulling it out of the apparatus contained in the box, to which the element is connected.

In the conventional technique for mounting these sleeves, it is known to associate one or more sealing elements with the sleeve.

Known sealing elements (resilient rings such as O-rings) are associated with the sleeve during the installation of the system.

It is also known to form a sealing ring in a manner such that it is fixed firmly to the sleeve by techniques for co-moulding it onto the sleeve.

An example of the formation of a sleeve as described above is given in United States patent US 4410479.

However, the sleeves formed in accordance with the methods of the prior art have the disadvantage of having a sealing element which can easily wear and deteriorate in operation.

This disadvantage is particularly evident when the sleeve is fixed and sealed onto the tubular element by means of a fixing ring nut which, when screwed onto the sleeve, clamps the sealing element around the tubular element.

There is therefore a need to provide a sleeve which ensures fixing and sealing onto a tubular element and which is such that the sealing element with which it is provided is particularly wear-resistant, above all when the sleeve is fixed and sealed onto the tubular element by means of a ring nut which clamps the sealing element onto the tubular element.

The problem underlying the present invention is that of devising a sleeve which has structural and functional characteristics such as to satisfy the above-mentioned needs and at the same time to overcome the disadvantages mentioned with reference to the prior art.

This problem is solved by a sleeve suitable for housing at least a portion of a tubular element and which comprises an internally hollow body for housing the said portion of the tubular element, the body having at least one flexible portion which can be clamped around the said portion of the tubular element, and a sealing element provided in the region of the flexible portion of the body of the sleeve and deformable together therewith, the sleeve being associable with clamping means suitable for deforming the assembly formed by the flexible portion of the body of the sleeve and the sealing element onto the said portion housed in the body of the sleeve. The sleeve is characterized in that the flexible portion of the body of the sleeve is at least partially embedded in the sealing element, forming means for fixing and at the same time sealing the housed portion of the tubular element, the fixing and sealing means being capable of being activated by the clamping means.

Further characteristics and the advantages of the sealing system according to the present invention will become clear from the following description of a preferred embodiment thereof, given by way of non-limiting example, in which the sleeve can be fixed and sealed onto an electrical connection cable and in which the cable extends through the sleeve in order to extend into a box containing electrical apparatus such as controls, operating devices, switches and the like.

The description is given below with reference to the appended drawings, in which:

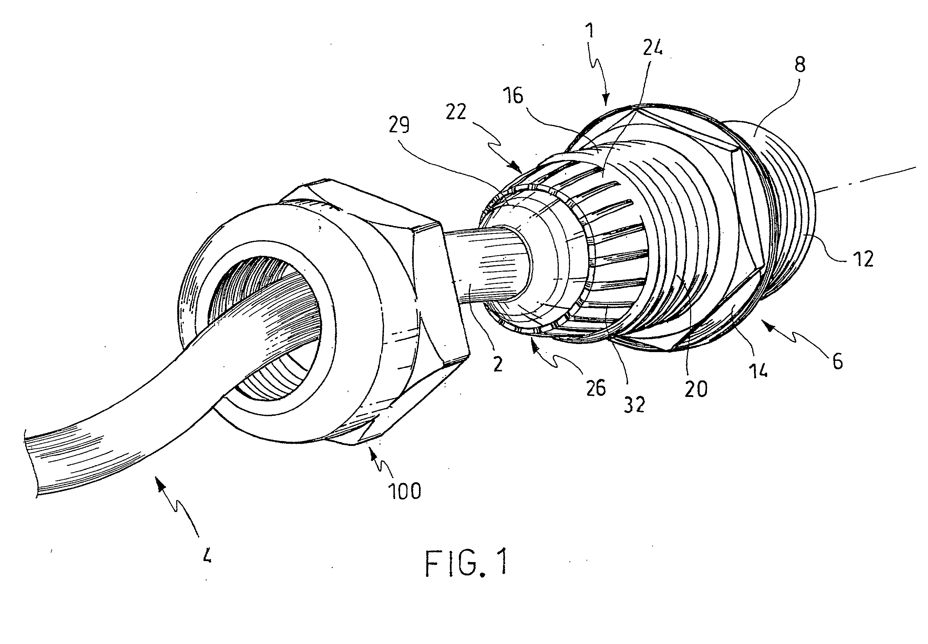

Figure 1 is a perspective view of a sleeve, of a fixing ring nut, and of a tubular element partially engaged on the sleeve,

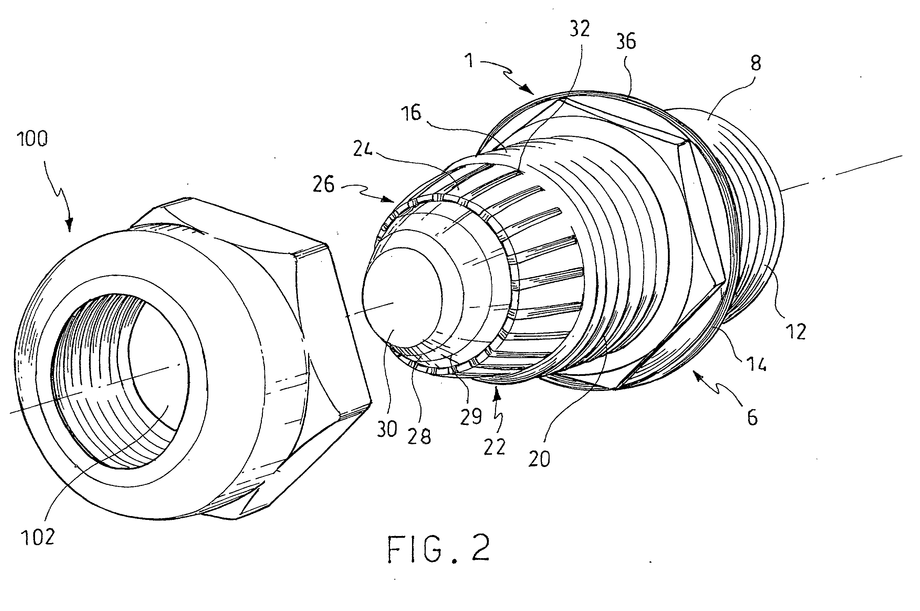

Figure 2 is a perspective view of the sleeve and of the fixing ring nut of Figure 1,

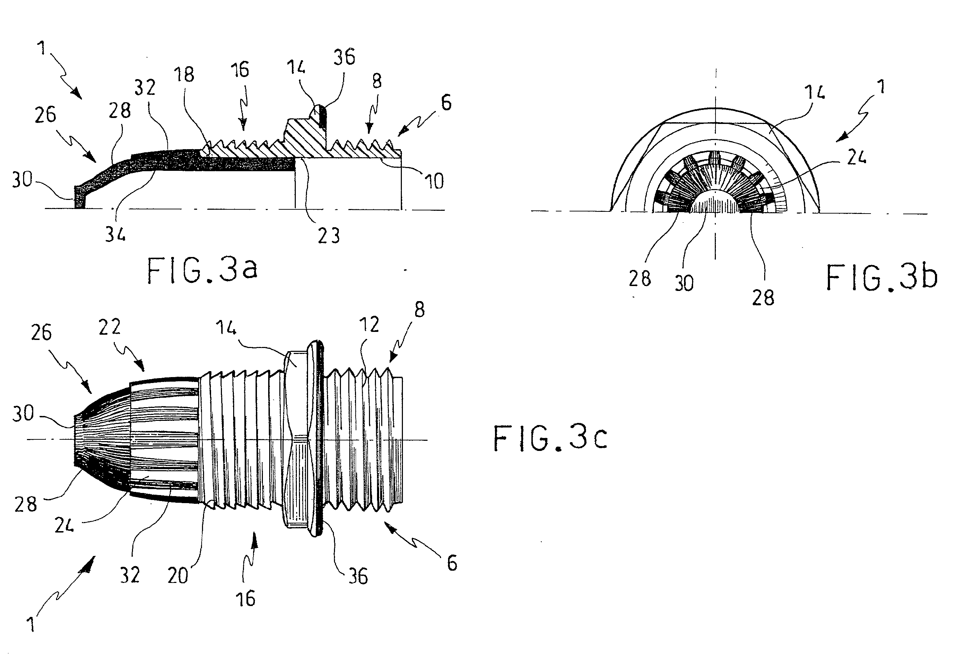

Figures 3a to 3c show a transverse section, a front view, and a plan view of the sleeve of Figure 1, respectively, and

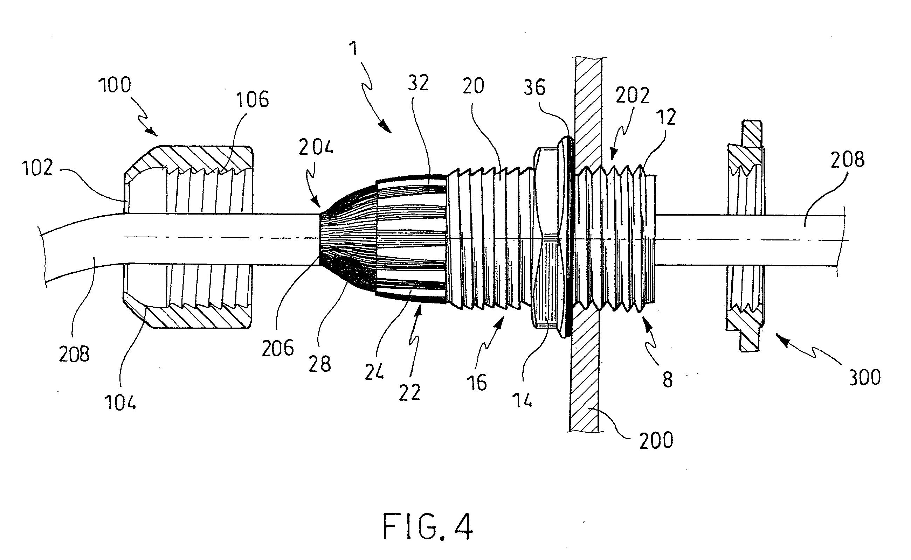

Figure 4 is a plan view of the sleeve of Figure 1, through which a cable extends, and which is mounted in a wall and is associated with the clamping ring nut of Figure 1 and with an inner ring nut.

With reference to the appended drawings, a sleeve for housing a portion 2 of a tubular element 4 is generally indicated 1.

The sleeve 1 comprises an internally hollow body 6 for housing the portion 2 of the tubular element 4.

In a preferred embodiment, the hollow body 6 extends along a central axis X-X, and preferably has a substantially cylindrical shape.

In a preferred embodiment, the hollow body 6 of the sleeve 1 comprises at least three tubular portions arranged in succession along the central axis X-X.

A first tubular portion 8 of the hollow body 6 of the sleeve 1 has a substantially smooth internal surface 10 whereas, externally, it has a thread 12 which extends from one end of the first tubular portion 8 to the other, terminating in the region of a circumferential projection 14.

The circumferential projection 14, which has a larger diameter than the first tubular portion 8 and than the second tubular portion 16 of the hollow body 6, preferably has a hexagonal shape suitable for cooperating with conventional screwing means such as workshop spanners, pliers, or the like.

A second portion 16 of the hollow body 6 of the sleeve 1 has a substantially smooth internal surface 18 and, externally, has a thread 20 which extends from the circumferential projection 14 to a flexible portion 22 of the hollow body 6 of the sleeve 1.

The diameter of the internal surface 10 of the first portion 8 of the hollow body 6 is preferably greater than the diameter of the internal surface 18 of the second portion 16 of the hollow body. The internal surfaces are adjacent one another and thus form a circumferential abutment 23.

The flexible portion 22 of the hollow body 6 of the sleeve 1 can be clamped around the portion 2 of the tubular element 4 which is housed in the hollow body 6.

In a preferred embodiment, the flexible portion 22 of the hollow body 6 comprises a portion provided with gripping fingers 24. The gripping fingers preferably extend, separately from one another, in the direction of the central axis X-X, in a "petal-like" configuration.

The sleeve 1 also comprises, in the region of the flexible portion 22 of the hollow body 6, a sealing element 26 which can be deformed, together with the flexible portion.

In a preferred embodiment, the sealing element 26 comprises a cap 28 projecting from the flexible portion 22 of the hollow body 6 and closed by a base 30.

The cap 28 preferably has gauge notches 29 arranged circumferentially on the outer surface of the cap 28. The gauge notches are preferably formed as grooves which are generally continuous and circumferential and are disposed on the outer surface of the cap 28. In a further embodiment, the notches are formed by visible and discontinuous marks, such as dashes, on the outer surface of the cap 28.

The sealing element 26 also comprises an incorporating portion 32 in which the flexible portion 22 of the hollow body 6 is embedded.

The incorporating portion 32 of the sealing element 26 preferably forms a single continuous body. In other words, the incorporating portion incorporates the gripping fingers 24 without being subdivided by the gripping fingers.

In other words, the sealing element 26 and the flexible portion 22 of the hollow body 6 form a single composite body in which the flexible portion 22 of the hollow body is configured as the supporting core and the incorporating portion 32 of the sealing element 26 is configured as the incorporating matrix.

A part of the incorporating portion 32 preferably forms a cylindrical, homogeneous and continuous seal 34 entirely enclosed by the gripping fingers 24 of the flexible portion 22 of the hollow body 6, forming a sheath sealing the sleeve 1 against the portion 2 of the tubular element 4 which is housed in the hollow body 6.

In a preferred embodiment, the flexible portion 22 of the hollow body 6 is configured as a cap section having a smaller end facing towards the cap 28 of the sealing element and a larger end facing the hollow body 6.

The flexible portion 22 of the hollow body 6 and the sealing element 26 in which the gripping portion is at least partially embedded form means for fixing and at the same time sealing the portion 2 of the tubular element 4 housed in the hollow body 6.

In a preferred embodiment, the sealing element 26 extends in the direction of the central axis X-X, inside the hollow body 6, adhering to the internal surface 18 of the second tubular portion 16 of the hollow body 6, preferably as far as the circumferential abutment 23 between the first tubular portion 8 of the hollow body 6 and the second tubular portion 16 of the hollow body.

The sealing element 26 is preferably fixed firmly to the flexible portion 22 of the hollow body 6.

In a preferred embodiment, the sealing element is formed by a technique of co-moulding of the hollow body 6 and of the sealing element 26 by methods known in the art and not described in detail.

The sealing element 26 is preferably made of a material softer than the material forming the flexible portion 22 of the hollow body. Preferably, the sealing element is made of thermoplastic rubber and the flexible portion 22 of the hollow body 6 of rigid, preferably self-extinguishing thermoplastic material.

In a further embodiment, the sleeve 1 comprises a resilient sealing ring 36 of the type known as an O-ring, preferably in the region of the peripheral edge of the circumferential projection 14, so as to face the thread 12 of the first tubular portion 8 of the hollow body 6.

The sealing ring 36 is preferably formed by co-moulding with the hollow body 6 by methods known in the art and not described below.

The sleeve 1 can be associated with a clamping ring nut 100 suitably shaped externally so as to cooperate with workshop tools such as spanners, pliers and the like, which can grip the ring nut and screw it onto the hollow body 6 of the sleeve 1 in the region of the flexible portion 22 and of the sealing element 26 of the sleeve 1.

The clamping ring nut 100 is a preferred and non-limiting example of clamping means.

In a further embodiment, the clamping means may be formed by at least one band which can be tightened onto the assembly of the sealing element 26 and of the flexible portion 22 of the sleeve 1, for example, by means of a nut-and-bolt connection.

Moreover, the clamping means may be formed by a band, preferably of metal, which can be subjected to plastic deformation onto the assembly formed by the sealing element 26 and the flexible portion 22 of the sleeve 1, for example, by means of a crimping tool.

The hollow clamping ring nut 100 has an opening 102 at one of its ends.

The diameter of the opening 102 in the ring nut 100 is substantially larger than the diameter of the end 30 of the sealing element 26 of the sleeve 1 and substantially smaller than the maximum diameter of the cap 28 of the sealing element 26.

In the region of the opening 102 in the ring nut 100, the ring nut 100 has, internally, a first, concave portion 104 which extends from the opening 102 to a second, threaded portion 106 of the internal surface of the ring nut 100.

During the installation of electrical, hydraulic or pneumatic systems and the like, both industrial and domestic, the sleeve 1 can be used, in particular, for enabling a tubular element such as a cable, a pipe, or the like to extend through the outer casings of various devices, for example, through the walls of a box.

Generally, a hole 202 is formed in the wall 200 of a box, for example, an electrical box containing switches and various other devices, and the first tubular portion 8 of the sleeve 1 can be inserted therein, preferably by being screwed into the hole.

A portion of the cap 28 of the sealing element 26 is removed from the sleeve 1 by means of suitable a cutting tool, for example, conventional scissors, wire strippers, electricians' nippers or the like so as to form, in the cap, an opening 204 provided with a rim 206.

A cable 208 or a pipe can pass through the opening 204 in the cap 28 of the sleeve 1 so that the cable 208 can be threaded through the sleeve 1. Moreover, the opening 204 in the cap 28 is such that, when the sleeve is coupled with the cable 208, its rim 206 remains in contact with the surface of the cable 208.

The notches 29 formed in the cap 28 of the sleeve 1 define portions of the cap 28 which can be removed, in dependence on the nominal diameter dimension of the cable 209 to be inserted in the sleeve. By way of example, a first notch may define the point on the cap 28 at which to perform the removal in order to insert a cable of ½ inch nominal diameter and a further notch may define the point on the cap 28 at which to perform the removal in order to insert a cable of ¾ inch nominal diameter.

The cable 208 extends through the opening 102 in the ring nut 100, through the opening 204 in the cap 26 of the sleeve, through the sleeve 1, and through an inner ring nut 300, to reach the interior of the box.

The inner ring nut 300 can be coupled with the sleeve 1 in the region of the first tubular portion 8 of the hollow body 6 which, in the assembled condition, is disposed on the inner side of the wall 200.

The ring nut 300 can be screwed onto the first tubular portion 8 of the sleeve 1 and, by interacting with the wall 200 during the screwing, pulls the sleeve towards the inner side of the wall. The action of the ring nut 300 results in compression of the sealing ring 36 against the outer surface of the wall 200, producing a seal between the outer surface of the wall 200 and the sleeve 1.

The fixing ring nut 100 can be coupled with the second tubular portion 16 of the sleeve 1 which, in the assembled condition, is disposed on the outer side of the wall 200 of the box.

The threaded portion 106 of the fixing ring nut 100 is screwed onto the thread 20 of the second tubular portion 16 of the sleeve 1.

The concave portion 104 of the fixing ring nut 100 interferes with the sealing element 26 and the flexible portion 22 of the sleeve 1, clamping the sealing element 26 and the flexible portion 22 onto the cable 208.

In other words, as the ring nut moves along the thread 20 of the second tubular portion 16 of the sleeve 1, the concave portion 104 of the fixing ring nut 100 compresses the sealing element 26 and the flexible portion 22 of the sleeve 1, clamping them onto the cable 208.

The sealing element 26 and the flexible portion 22, which form means for fixing and at the same time sealing the sleeve 1, can therefore be activated by the fixing ring nut 100, which forms clamping means.

In particular, the fixing ring nut 100 interferes with the flexible portion 22 of the hollow body 6 of the sleeve 1 which, as described above, is incorporated in the sealing element 26.

In particular, the sealing element 26, compressed by the flexible portion 22 of the hollow body, is clamped onto the cable 208, forming combined fixing and sealing means which are particularly resistant to wear and abrasion due to the action of the ring nut.

The main advantage of the sleeve consists in the formation of a fixing and of a seal on a tubular element which are particularly wear-resistant, above all, when the fixing and the sealing of the sleeve onto the tubular element are achieved by means of a ring nut which clamps the sealing element onto the tubular element.

Moreover, the sleeve advantageously has fixing and sealing means which display optimal resilient recovery so that the sleeve can be reused several times without showing a shape memory in the sealing element which is subjected to deformation.

Moreover, the sleeve has the advantage of having a sealing element which is positioned precisely at a flexible end of the sleeve body, ensuring that a force exerted on the flexible body by means of the fixing means such as a ring nut, a band, or the like, induces optimal deformation of the sealing element onto the tubular portion, ensuring optimal fitting, even if it is performed by unskilled personnel.

Finally, the sleeve provides a sealing element which cannot easily be lost or separated from the sleeve body.

In other words, the formation of the sealing element integrally with the sleeve body results in inseparability of the sealing element and the sleeve body. This ensures that the fitting of the sleeve is always performed in accordance with the installation standards, even if it is performed by an unskilled or careless operator.

Naturally, in order to satisfy contingent and specific requirements, a person skilled in the art may apply to the sleeve described and illustrated with reference to the drawings, many modifications and variations all of which, however, are included within the scope of protection of the invention as defined by the appended claims.

## Claims

1. Sleeve (1) suitable for housing at least a portion (2) of a tubular element (4), and which comprises:
- an internally hollow body (6) for housing the said portion of the tubular element (4), the body having at least one flexible portion (22) which can be clamped around the said portion of the tubular element (4), and
- a sealing element (26) provided in the region of the flexible portion of the body (6) of the sleeve (1) and deformable together therewith,
the sleeve being associable with clamping means suitable for deforming the assembly formed by the flexible portion of the body (6) of the sleeve (1) and the sealing element onto the said portion housed in the body (6) of the sleeve (1),
the sleeve being **characterized in that** the flexible portion of the body (6) of the sleeve (1) is at least partially embedded in the sealing element, forming means for fixing and at the same time sealing the housed portion (2) of the tubular element (4), the fixing and sealing means being capable of being activated by the clamping means.

2. Sleeve (1) according to Claim 1 in which the sealing element is fixed firmly to the flexible portion of the hollow body (6).

3. Sleeve (1) according to Claim 1 or Claim 2 in which the sealing element is formed by techniques for co-moulding of the sealing element (26) with the hollow body (6).

4. Sleeve (1) according to any one of Claims 1 to 3 in which the sealing element (26) has an end cap (28) closed by a base (30) which can be removed at least partially to permit the introduction of the portion of the tubular element housed in the sleeve.

5. Sleeve according to Claim 4 in which the cap has a plurality of gauge notches (29) for calibrating the removable portion of the cap (28) to permit the insertion of portions of tubular elements (4) of different nominal diameters.

6. Sleeve according to any one of Claims 1 to 5 in which the flexible portion (22) of the hollow body (6) is incorporated at least partially in the sealing element (26), a portion of the sealing element (26) forming a homogeneous and continuos seal (34), entirely inside the flexible portion (22).

7. Sleeve according to any one of Claims 1 to 6 in which the flexible portion (22) of the hollow body (6) comprises a plurality of gripping fingers (24) which project from the hollow body (6) in the direction of a central axis (XX) of the hollow body.

8. Sleeve according to Claim 7 in which the sealing element (26) comprises an incorporating portion (32) in which the gripping fingers (24) of the hollow body (6) are at least partially incorporated.

9. Sleeve according to any one of Claims 1 to 8 in which the flexible portion (22) is shaped substantially as a cap section having its smaller base projecting from the hollow body (6) of the sleeve farther than its larger base.

10. Sleeve according to any one of Claims 1 to 9, further comprising a resilient sealing ring (36).

11. Sleeve according to Claim 10 in which the resilient sealing ring (36) is disposed in the region of a peripheral edge of an outer circumferential projection (14) of the hollow body (6) of the sleeve.

12. Sleeve according to Claim 10 or 11 in which the resilient sealing ring (36) is formed by co-moulding of the ring (36) with the hollow body (6) of the sleeve.

13. Sleeve according to any one of the preceding claims in which the sealing element (26) is made of a material which can deform in order to form a seal against the portion (2) of the tubular element (4), and the flexible portion (22) of the hollow body (6) of the sleeve is made of a flexible material which can squeeze a portion of the sealing element (26) in order to deform it onto the portion (2) of the tubular element (4).

14. Sleeve according to Claim 13 in which the sealing element (26) is made of thermoplastic rubber.

15. Sleeve according to Claim 13 or 14 in which the flexible portion (22) of the hollow body is made of thermoplastic material.

16. Sleeve according to Claim 15 in which the flexible portion (22) of the hollow body (6) is made of self-extinguishing thermoplastic material.

17. Mounting kit comprising a sleeve according to any one of the preceding claims and at least one clamping element (100) for cooperating with the hollow body (6) of the sleeve (1), clamping the assembly formed by the flexible portion (22) and of the sealing element (26) onto the portion (2) of the tubular element (4) housed in the sleeve (1).

18. Mounting kit according to Claim 17 in which the clamping element is a clamping band which can be tightened around the assembly formed by the flexible portion (22) and the sealing element (26) of the sleeve (1).

19. Mounting kit according to Claim 17 in which the clamping element is a clamping band which can undergo plastic deformation around the assembly formed by the flexible portion (22) and the sealing element (26) of the sleeve (1).

20. Mounting kit according to Claim 17 in which the clamping element is a clamping ring nut (100).

21. Mounting kit according to Claim 20 in which the ring nut has a hollow internal portion (104) which can interfere with the assembly formed by the sealing element (26) and the flexible portion (22) of the sleeve (1) when the ring-nut (100) is in the mounted configuration on the sleeve (1), clamping the assembly onto the tubular portion housed in the sleeve (1).
